# EUROPÄISCHE PATENTSCHRIFT

(11) **EP 2 667 179 B1**
(45) Veröffentlichungstag und Bekanntmachung des Hinweises auf die Patenterteilung: **28.01.2015**
(21) Anmeldenummer: 13166252.0
(22) Anmeldetag: 02.05.2013
(51) Int. Cl.: G01N 17/00

(54) **Verfahren und Vorrichtung zur Prüfung der Beständigkeit eines Werkstoffs**
Method and device for testing a material for resistance
Procédé et dispositif pour examiner la résistance d'un matériau

(30) Priorität: 22.05.2012 DE 102012103777
(43) Veröffentlichungstag der Anmeldung: 27.11.2013
(73) Patentinhaber: Maschinenfabrik Reinhausen GmbH, 93059 Regensburg (DE)
(72) Erfinder: Nettesheim, Stefan, 12205 Berlin (DE)
(74) Vertreter: Reichert & Lindner Partnerschaft Patentanwälte

(56) Entgegenhaltungen:
- JP-A- 2008 216 001
- US-A- 5 281 535
- MOHAMED A-A H ET AL: "Ozone generation in an atmospheric pressure micro-plasma jet in air", PLASMA SCIENCE, 2004. ICOPS 2004. IEEE CONFERENCE RECORD - ABSTRACTS. THE 31ST IEEE INTERNATIONAL CONFERENCE ON BALTIMORE, MD, USA JUNE 28-JULY 1, 2004, PISCATAWAY, NJ, USA,IEEE, 28. Juni 2004 (2004-06-28), Seiten 211-211, XP010728678, DOI: 10.1109/PLASMA.2004.1339804 ISBN: 978-0-7803-8334-0

## Beschreibung

Die vorliegende Erfindung betrifft ein Verfahren zur Beständigkeitsprüfung eines Werkstoffs, bei dem eine Werkstoffprobe einer Prüfatmosphäre ausgesetzt wird. Ebenso betrifft die Erfindung eine entsprechende Vorrichtung.

Beständigkeitsprüfungen von Werkstoffen sind in vielen technischen Gebieten von erheblicher wirtschaftlicher und oftmals auch sicherheitsrelevanter Bedeutung. Dazu werden Werkstoffproben Umgebungsbedingungen ausgesetzt, die es gestatten beispielsweise Alterungsprozesse der Werkstoffe, in der Regel in zeitgeraffter Form, zu verfolgen.

Beispielsweise ist für organische Stoffe, insbesondere elastomere und polymere Materialien, die Ozon-Beständigkeitsprüfung von großer Bedeutung. Durch die Beaufschlagung mit Ozon verspröden diese Materialien sehr schnell. An den beaufschlagten Oberflächen bilden sich Haarrisse, durch die eine weitergehende Zerstörung eingeleitet wird. Um die Ozon- und UV-Licht-Beständigkeit von solchen Werkstoffen zu qualifizieren sind vielfältige Prüfmethoden und Prüfanordnungen bekannt und werden vermarktet.

Für sicherheitsrelevante Lebensdaueruntersuchungen insbesondere im Automobilbau und in der Luftfahrt werden umfangreiche Korrosionstests durchgeführt. Salzsprühkammern ermöglichen reproduzierbare, zeitgeraffte Korrosionsprüfungen (Salznebeltest) nach einschlägigen nationalen und internationalen Normen.

Schadgasprüfungen mit speziellen Einrichtungen sind ein gängiges Verfahren um den Einfluss von korrosiven Gasen auf Bauteile festzustellen. Solche Bauteile können zum Beispiel Komponenten von Anlagen der chemischen Industrie oder auch hochbelastete Bauteile in Turbinen oder Prozessgaskompressoren sein. Vorrichtungen für Beständigkeitsprüfungen werden beispielsweise von der Firma Weiss Umwelttechnik (http://www.wut.com) angeboten.

Die deutsche Patentschrift DE 41 15 586 C2 beschreibt ein Verfahren zum Konditionieren von Luft sowie eine Klimaprüfkammer. Dabei kann die Luft innerhalb eines abschließbaren Raumes durch Einstellen ihrer Temperatur und ihrer Feuchtigkeit konditioniert werden.

Die deutsche Patentschrift DE 42 36 897 C2 beschreibt Bewitterungsgeräte, mit denen Werkstoffproben mit stark sauren Flüssigkeiten besprüht werden können. Darüberhinaus können die Werkstoffproben UV-Licht und diversen Gasen ausgesetzt werden.

US 5281535 beschreibt ein Verfahren und ein Gerät zur Beständigkeitsprüfung eines Werkstücks, wobei die Probe kontrollierten atmosphärischen Bedingungen wie Temperatur, Druck und Sauerstoffplasma ausgesetzt wird. JP 2008 216001 beschreibt ein ähnliches Verfahren und Gerät, wobei zusätzlich noch mit UV-Licht bestrahlt werden kann.

Bei Vorrichtungen aus dem Stand der Technik müssen Gase, mit denen Werkstoffproben beaufschlagt werden sollen, bevorratet werden. Bei den Gasen handelt es sich oftmals um korrosive oder giftige Gase, mit welchen die Einwirkung etwa von Umweltschadstoffen auf eine Werkstoffprobe simuliert werden soll. Dementsprechend sind Lagerung und Handhabung solcher Gase problematisch. Manche in typischen industriellen Belastungssituationen auftretende Substanzen sind instabil und müssen bei Bedarf erzeugt werden, beispielsweise Ozon, Radikale, Stickoxide, Peroxide.

Aufgabe der Erfindung ist, ein Verfahren bereitzustellen, durch das eine Beständigkeitsprüfung von Werkstoffen kostengünstig und betriebssicher möglich ist.

Diese Aufgabe wird gelöst durch ein Verfahren nach Anspruch 1.

Eine weitere Aufgabe der Erfindung ist es, eine Vorrichtung bereitzustellen, mit der eine Beständigkeitsprüfung von Werkstoffen kostengünstig und betriebssicher möglich ist.

Diese Aufgabe wird gelöst durch eine Vorrichtung gemäß Anspruch 11.

Bei dem erfindungsgemäßen Verfahren wird eine Werkstoffprobe in eine Prüfkammer eingebracht. Bei der Werkstoffprobe kann es sich um ein Werkstück handeln, dass aus einem oder mehreren Werkstoffen, beispielsweise aus verklebten, verschweißten oder verlöteten Materialien, besteht, oder um eine einfache Materialprobe eines Werkstoffs.

In einem Plasmaerzeuger wird ein Plasma erzeugt und als Plasmajet in die Prüfkammer eingebracht. Mittels des Plasmajets wird in der Prüfkammer eine definierte Prüfatmosphäre ausgebildet, um auf die Werkstoffprobe einzuwirken.

Die Prüfatmosphäre enthält Substanzen bezüglich derer die Beständigkeit der Werkstoffprobe geprüft werden soll. Die Wirkung der Prüfatmosphäre auf die Werkstoffprobe wird analysiert. Aus der Analyse ergeben sich Aussagen über die, in der Regel schädigende, Wirkung von Bestandteilen der Prüfatmosphäre auf die Werkstoffprobe. Um solche Aussagen zuverlässig treffen zu können, wird die mindestens eine Werkstoffprobe der Prüfatmosphäre vorteilhaft nach einem definierten Protokoll ausgesetzt. Eine schädigende Wirkung der Prüfatmosphäre auf die Werkstoffprobe kann sich im Falle eines Werkstücks auf wenigstens ein Material des Werkstücks als solches beziehen, oder nur Verbindungen zwischen Bestandteilen des Werkstücks, also etwa Schweißnähte, Löt- oder Klebeverbindungen betreffen.

Eine spezielle Art der Beständigkeitsprüfung, für welche das erfindungsgemäße Verfahren eingesetzt werden kann, sind Lebensdaueruntersuchungen durch zeitgeraffte Korrosionsprüfungen und / oder andere zeitgeraffte Alterungsversuche, welche oben bereits erwähnt worden sind, und für welche einschlägige nationale wie internationale Normen existieren. Das erfindungsgemäße Verfahren führt die Lebensdaueruntersuchungen gemäß diesen Normen durch, und erzeugt die Prüfatmosphäre durch ein Plasma. Erfindungsgemäß wird Prüfatmosphäre aus der Prüfkammer abgezogen, und zumindest ein Teil der abgezogenen Prüfatmosphäre wird gefiltert und / oder aufbereitet und anschließend als Prozessgas der Plasmaerzeugung zugeführt.

In Ausführungsformen wird das Plasma aus wenigstens einem Prozessgas generiert und erzeugt durch Umsetzung des wenigstens einen Prozessgases in dem Plasma und im Plasmajet die Bestandteile der gewünschten Prüfatmosphäre. Die Zusammensetzung der Prüfatmosphäre wird vorteilhaft durch einen Sensor geprüft und überwacht. Die Umsetzung kann beispielsweise durch plasmachemische Prozesse oder Hochtemperaturprozesse erfolgen. Bedeutsam dabei ist, dass als Prozessgas, also als Ausgangsstoff für die Erzeugung der Prüfatmosphäre, Stoffe verwendet werden können, welche in der Handhabung und / oder Lagerung einfacher sind, als die Stoffe, welche für die Prüfatmosphäre nach dem Stand der Technik bereitgestellt werden müssen.

In Ausführungen kann es sich bei dem mindestens einen Prozessgas um Luft oder Luft mit einem definierten Feuchtigkeitsgehalt handeln. Auch Sauerstoff ist ein mögliches Prozessgas. Je nach gewünschter Zusammensetzung der Prüfatmosphäre kommen auch andere Prozessgase in Betracht. Gewünschte Bestandteile der Prüfatmosphäre sind beispielsweise Ozon, Stickoxide, Peroxide, insbesondere Wasserstoffperoxid, Chlorwasserstoff, Salpetersäure oder Radikale.

So kann beispielsweise aus Sauerstoff oder Luft Ozon mit Hilfe eines nichtthermischen Plasmas aus einer dielektrischen Barriereentladung erzeugt werden. In einer elektrischen Bogenentladung können aus Luft Stickoxide durch eine plasmachemische Umsetzung generiert werden. Feuchte Luft kann plasmachemisch zu peroxidhaltiger Atmosphäre gewandelt werden.

Um die gewünschte chemische Zusammensetzung der Prüfatmosphäre zu erreichen, wird in Ausführungsformen dem mindestens einen Prozessgas mindestens ein weiterer Stoff zugesetzt. Die Zusetzung des mindestens einen weiteren Stoffs zum Prozessgas erfolgt bevorzugt im Plasmaerzeuger. Insbesondere kann der weitere Stoff als Aerosol zugesetzt werden. In bestimmten Ausgestaltungen des Verfahrens enthält das Aerosol wenigstens ein Salz; dabei kann es sich um ein organisches oder ein anorganisches Salz handeln. Durch das Einbringen von Salzen in das Prozessgas kann insbesondere eine korrosive und / oder saure Prüfatmosphäre erzeugt werden.

In der Prüfkammer kann der Prüfatmosphäre eine gerichtete Strömung und / oder eine Verwirbelung aufgeprägt werden. Dadurch kann die Beaufschlagung der Werkstoffprobe mit der Prüfatmosphäre beeinflusst werden.

Das Plasma selbst kann beispielsweise durch eine gepulste oder kontinuierliche dielektrische Barriereentladung oder durch einen kontinuierlichen oder gepulsten elektrischen Lichtbogen erzeugt werden. Die Entladung bzw. der Lichtbogen wird in dem mindestens einen Prozessgas erzeugt, und in dem so generierten Plasma wird zumindest ein Teil des mindestens einen Prozessgases umgesetzt, etwa plasmachemisch oder durch Hochtemperaturprozesse. Die Umsetzung des mindestens einen Prozessgases erstreckt sich, je nach Ausführungsform des Verfahrens, auch auf einen dem mindestens einen Prozessgas zugesetzten Stoff.

Zusätzlich zur Aussetzung der Werkstoffprobe an der Prüfatmosphäre wird in Ausgestaltungen des Verfahrens die Werkstoffprobe mit UV-Licht beaufschlagt. Das UV-Licht kann vorteilhaft durch eine Bogenentladung erzeugt werden, in bestimmten Ausgestaltungen insbesondere durch den Lichtbogen, welcher in diesen Ausgestaltungen auch das Plasma generiert.

In Ausführungsformen des Verfahrens wird zumindest die Temperatur oder der Druck oder der Feuchtigkeitsgehalt oder der pH-Wert oder der Ozongehalt oder allgemeiner die chemische Zusammensetzung der Prüfatmosphäre geregelt.

Die erfindungsgemäße Vorrichtung zur Beständigkeitsprüfung mindestens einer Werkstoffprobe umfasst eine Prüfkammer, die dazu ausgebildet ist, die mindestens eine Werkstoffprobe aufzunehmen. Die Vorrichtung umfasst ferner einen Plasmaerzeuger, der eine Zuführung für mindestens ein Prozessgas zur Erzeugung eines Plasmas und einen Auslass für einen Plasmajet in die Prüfkammer zum Ausbilden einer definierten Prüfatmosphäre aufweist. Des Weiteren umfasst die Vorrichtung ein Umwälzsystem, welches Prüfatmosphäre aus der Prüfkammer abzieht, die abgezogene Prüfatmosphäre aufbereitet, und die derart aufbereitete Prüfatmosphäre als Prozessgas zum Plasmaerzeuger zurückführt. Die Aufbereitung der abgezogenen Prüfatmosphäre kann eine Filterung und / oder katalytische Behandlung der Prüfatmosphäre umfassen.

In Ausführungsformen umfasst die Vorrichtung eine Zuführung für einen weiteren Stoff zum Plasmaerzeuger.

In vorteilhaften Weiterbildungen enthält die Prüfkammer wenigstens einen Sensor für mindestens einen der folgenden Parameter der Prüfatmosphäre: Temperatur, Druck, Feuchtigkeitsgehalt, pH-Wert, Ozongehalt, chemische Zusammensetzung der Prüfatmosphäre. Dabei ist in der Vorrichtung eine Regeleinrichtung vorgesehen, durch welche eine Regelung des mindestens einen Parameters möglich ist. Durch die Regeleinrichtung kann beispielsweise die Zufuhr von Prozessgas und / oder eines zusätzlichen Stoffs zum Plasmaerzeuger gesteuert werden, insbesondere natürlich in Abhängigkeit von den mit dem wenigstens einen Sensor erfassten Messwerten. Ebenso kann natürlich eine Spannungsquelle, welche die für die Erzeugung des Plasmas erforderliche Spannung bereitstellt, durch die Regeleinrichtung gesteuert werden. Die Regeleinrichtung kann z.B. Frequenz, Amplitude und Signalform einer Wechselspannung oder gepulsten Gleichspannung steuern.

Insbesondere bietet die erfindungsgemäße Vorrichtung eine Möglichkeit, das erfindungsgemäße Verfahren durchzuführen.

Im Weiteren wird die Erfindung an Hand von Ausführungsbeispielen und den beigefügten Figuren näher beschrieben. Dabei werden gleiche oder gleich wirkende Elemente mit identischen Bezugszeichen versehen. Es zeigt
- **Figur 1**: eine erste Ausführungsform einer erfindungsgemäßen Vorrichtung,
- **Figur 2**: eine zweite Ausführungsform einer erfindungsgemäßen Vorrichtung, und
- **Figur 3**: eine schematische Darstellung einer erfindungsgemäßen Vorrichtung mit der Prüfatmosphäre aufgeprägten Strömungen.

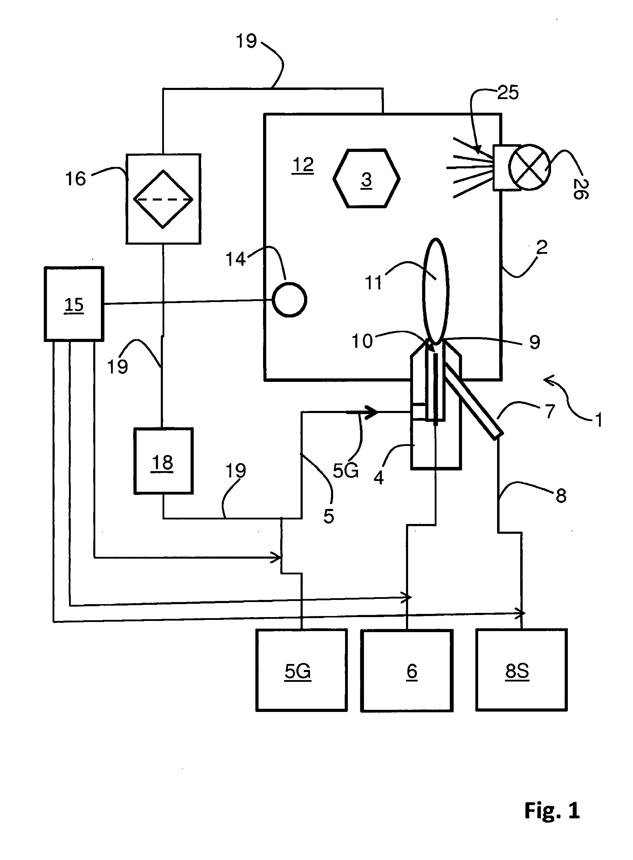

**Figur 1** zeigt eine erste Ausführungsform einer Vorrichtung 1 zur Beständigkeitsprüfung einer Werkstoffprobe 3. Die Werkstoffprobe 3 befindet sich in einer Prüfkammer 2. Die Vorrichtung 1 umfasst einen Plasmaerzeuger 4, dem ein Prozessgas 5G aus einem Prozessgasvorrat über eine Zuführung 5 zuführbar ist. Eine Spannungsquelle 6 stellt die zur Erzeugung eines Plasmas 10 aus dem Prozessgas 5G im Plasmaerzeuger 4 erforderliche Spannung bereit. In der dargestellten Ausführungsform der Vorrichtung 1 umfasst der Plasmaerzeuger 4 einen Injektor 7 für wenigstens einen weiteren Stoff 8S, über den der weitere Stoff 8S im Plasmaerzeuger 4 dem Prozessgas 5G beigemischt werden kann. Der weitere Stoff 8S wird aus einem entsprechenden Vorrat über eine Zuführung 8 zum Injektor 7 geführt. Der Injektor 7 kann beispielsweise eine Zerstäubung des zugeführten weiteren Stoffs 8S bewirken, so dass der zugeführte weitere Stoff 8S als Aerosol in dem Prozessgas 5G vorliegt.

Durch einen Auslass 9 des Plasmaerzeugers 4 strömt Plasma 10 als Plasmajet 11 in die Prüfkammer 2 ein. Dieses Plasma 10 enthält umgesetztes Prozessgas und baut so die in der Prüfkammer 2 vorliegende Prüfatmosphäre 12 auf bzw. erhält sie aufrecht.

In der gezeigten Ausführungsform ist ferner ein Sensor 14 in der Prüfkammer 2 vorgesehen. Der Sensor 14 erfasst mindestens einen Parameter der Prüfatmosphäre12 , beispielsweise Temperatur oder chemische Zusammensetzung, und übermittelt den erfassten Wert des mindestens einen Parameters an eine Regeleinrichtung 15, durch welche die Vorrichtung 1 derart gesteuert wird, dass die jeweiligen Parameter die gewünschten Werte, innerhalb einer vordefinierten zulässigen Schwankungsbreite, annehmen. Zu diesem Zweck kann die Regeleinrichtung 15 zumindest auf die Zuführung 5 für das Prozessgas 5G oder die Zuführung 8 für den weiteren Stoff 8S oder die Spannungsquelle 6 steuernd einwirken.

Der Prüfkammer 2 wird Prüfatmosphäre 12 entnommen und einer Aufbereitungseinrichtung 16 zugeführt. Die Aufbereitungseinrichtung 16 kann Filter und / oder Katalysatoren umfassen, um für das weitere Verfahren schädliche Substanzen aus der Prüfatmosphäre 12 zu entfernen. In einem Druckerzeuger 18 wird die aufbereitete Prüfatmosphäre auf den erforderlichen Druck gebracht, um dem Plasmaerzeuger 4 über die Zuführung 5 als Prozessgas 5G zugeführt werden zu können.

Aufbereitungseinrichtung 16 und Druckerzeuger 18 bilden zusammen mit den entsprechenden Führungseinrichtungen 19, beispielsweise Rohrleitungen, für die entnommene bzw. aufbereitete Prüfatmosphäre ein Umwälzsystem für die Prüfatmosphäre.

Beim Betrieb der Vorrichtung 1 kann zunächst die Prüfkammer 2 mit einer Atmosphäre, etwa Prozessgas 5G aus einem Vorrat, befüllt werden, aus der die gewünschte definierte Prüfatmosphäre 12 durch Umsetzung in dem Plasma 10 und im Plasmajet 11 gebildet werden kann. Dabei wird diese Atmosphäre dann durch das Umwälzsystem durch den Plasmaerzeuger 4 geführt, wobei wenigstens ein weiterer Stoff 8S zugesetzt werden kann. Ebenso kann das anfängliche Befüllen der Prüfkammer 2 durch den bereits aktivierten Plasmaerzeuger 4 erfolgen, gegebenenfalls unter Zusatz eines weiteren Stoffes 8S. Etwaige Verluste an Prüfatmosphäre 12, beispielsweise bedingt durch das Recyclingsystem, können aus dem Vorrat Prozessgas 5G ausgeglichen werden.

In der gezeigten Ausführungsform ist ferner eine Lichtquelle 26 für UV-Licht 25 vorgesehen. Als Teil der Beständigkeitsprüfung kann die Werkstoffprobe 3 und / oder die Prüfatmosphäre 12 mit dem UV-Licht 25 beaufschlagt werden. Das UV-Licht 25 kann in der Prüfatmosphäre 12 und / oder an der Werkstoffprobe 3 chemische Reaktionen auslösen oder beeinflussen, welche für die Beständigkeitsprüfung, beispielsweise für eine Lebensdaueruntersuchung, welche den Einfluss von Sonnenlicht berücksichtigt, von Bedeutung sind. In der gezeigten Ausführungsform wird eine separate Lichtquelle 26 für das UV-Licht 25 verwendet. Das UV-Licht 25 kann in der Lichtquelle 26 insbesondere durch einen Lichtbogen erzeugt werden. In Ausführungsformen, in denen zur Plasmaerzeugung ein Lichtbogen verwendet wird, ist es jedoch ebenfalls denkbar, diesen Lichtbogen zusätzlich für die Erzeugung von UV-Licht zu nutzen. Eine separate UV-Lichtquelle ist in diesem Fall entbehrlich, wenn das vom plasmaerzeugenden Lichtbogen generierte UV-Licht allen Erfordernissen an die jeweils durchzuführende Beständigkeitsprüfung genügt. Es ist für den Fachmann selbstverständlich, dass zur Nutzung des plasmaerzeugenden Lichtbogens als UV-Lichtquelle das UV-Licht aus dem Plasmaerzeuger 4 ausgekoppelt und erforderlichenfalls auf die Werkstoffprobe 3 geleitet werden muss. Hierbei kann das UV-Licht auch gefiltert werden.

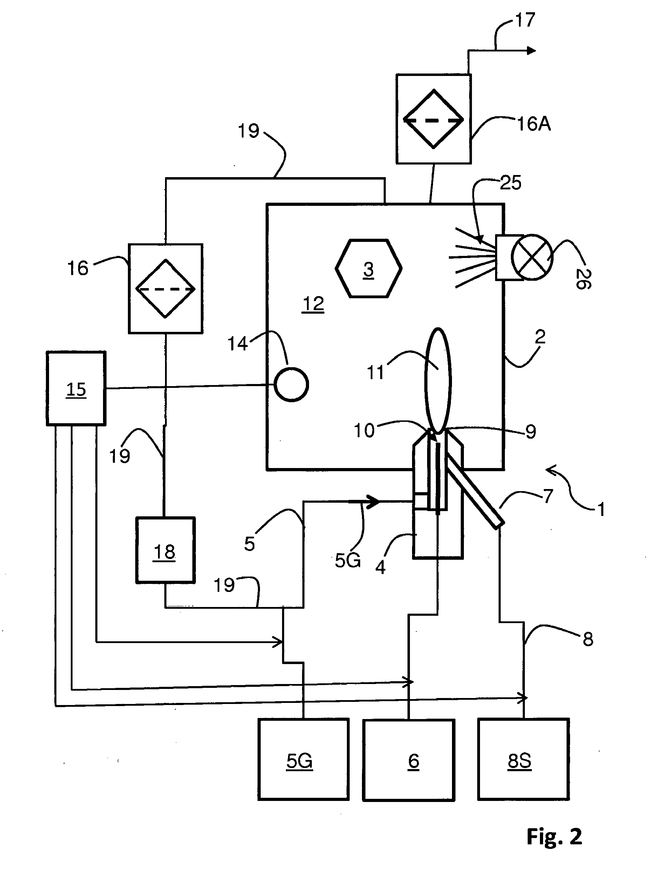

**Figur 2** zeigt eine weitere Ausführungsform der erfindungsgemäßen Vorrichtung 1. Etliche der dargestellten Elemente der Vorrichtung 1 wurden bereits in Zusammenhang mit der Figur 1 beschrieben.

In der hier gezeigten Ausführungsform wird ein Teil der aus der Prüfkammer 2 entnommenen Prüfatmosphäre 12 einer Abgasaufbereitungseinrichtung 16A zugeführt. Die Abgasaufbereitungseinrichtung 16A kann Filter und / oder Katalysatoren umfassen. Die in der Abgasaufbereitungseinrichtung 16A aufbereitete Prüfatmosphäre gelangt als Abluft 17 in die Umgebung. Die Aufbereitung dient hauptsächlich dazu, durch das Plasma 10 im Prozessgas erzeugte chemische Verbindungen aus der Prüfatmosphäre 12 zu entfernen, etwa durch Filterung und / oder durch katalytische Prozesse. Es sind insbesondere diese chemischen Verbindungen, deren Wirkung auf die Werkstoffprobe 3 bei der Beständigkeitsprüfung mit der Vorrichtung 1 von Interesse ist. Diese chemischen Verbindungen sind oftmals umweltschädlich, so dass sie aus der Prüfatmosphäre 12 entfernt werden müssen, ehe diese an die Umwelt abgegeben werden kann. Auch hier ist es möglich, Prozessgas 5G aus einem Vorrat bereitzustellen, sei es nur zu Anfang der Ausbildung der Prüfatmosphäre 12, wie oben bereits erwähnt, oder um durch teilweise Abgabe von aufbereiteter Prüfatmosphäre an die Umgebung entstandene Verluste auszugleichen.

In Abwandlung der gezeigten Ausführungsform kann die Abluft 17 auch aus der Aufbereitungseinrichtung 16 abgezweigt werden. Je nach chemischer Zusammensetzung der Prüfatmosphäre 12 und Ausgestaltung der Aufbereitungseinrichtung 16 kann in diesem Fall eine separate Abgasaufbereitungsanlage 16A erforderlich sein oder nicht.

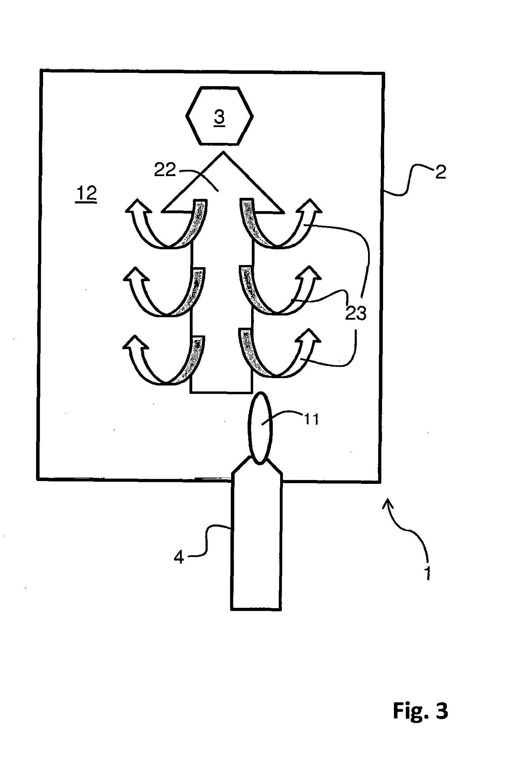

**Figur 3** beschränkt sich stark schematisiert auf die Darstellung der Prüfkammer 2, des Plasmaerzeugers 4 und der Werkstoffprobe 3. In der Figur 3 sind der Prüfatmosphäre 12 in der Prüfkammer 2 eine gerichtete Strömung 22 und eine Verwirbelung 23 aufgeprägt. Auf diese Weise kann die Beaufschlagung der Werkstoffprobe 3 mit der Prüfatmosphäre 12 beeinflusst werden. Selbstverständlich können auch bei einer Ausführungsform wie in Figur 3, bei der eine Verwirbelung und / oder eine gerichtete Strömung der Prüfatmosphäre 12 vorliegt, Elemente der Vorrichtung 1 vorhanden sein, welche in den Figuren 1 und 2 diskutiert wurden. Die gerichtete Strömung 22 kann beispielsweise durch ein Gebläse erzeugt werden oder der Prüfatmosphäre 12 durch das Umwälzsystem aufgeprägt werden. Verwirbelungen 23 können beim Eintritt des Plasmas als Plasmajet 11 aus dem Plasmaerzeuger 4 in die Prüfkammer 2 entstehen, zu ihrer gezielten Erzeugung können auch Leitbleche oder Hindernisse für eine zunächst gerichtete Strömung 22 eingesetzt werden.

## Patentansprüche

1. Verfahren zur Beständigkeitsprüfung mindestens einer Werkstoffprobe (3), umfassend die folgenden Schritte:
a) Einbringen der Werkstoffprobe (3) in eine Prüfkammer (2);
b) Erzeugen eines Plasmas (10) in einem Plasmaerzeuger (4) und Einbringen eines Plasmajets (11) in die Prüfkammer (2);
c) Ausbilden einer definierten Prüfatmosphäre (12) in der Prüfkammer (2) mittels des Plasmajets (11) zur Einwirkung der Prüfatmosphäre (12) auf die Werkstoffprobe (3);
**dadurch gekennzeichnet, dass**
der Prüfkammer (2) Prüfatmosphäre (12) entnommen und zumindest ein Teil der der Prüfkammer (2) entnommenen Prüfatmosphäre (12) nach Filterung und / oder Aufbereitung als ein Prozessgas (5G) dem Plasmaerzeuger (4) zugeführt wird.

2. Verfahren nach Anspruch 1, **wobei** die Prüfatmosphäre (12) durch Umsetzung mindestens eines Prozessgases (5G) in dem Plasma (10) und im Plasmajet (11) erzeugt wird, und wobei die Zusammensetzung der Prüfatmosphäre (12) durch einen Sensor (14) geprüft und überwacht wird.

3. Verfahren nach Anspruch 2, **wobei** das mindestens eine Prozessgas (5G) Sauerstoff, Luft, oder Luft mit einem definierten Feuchtigkeitsgehalt ist.

4. Verfahren nach Anspruch 2 oder 3, **wobei** dem mindestens einen Prozessgas (5G) wenigstens ein Stoff (8S) im Plasmaerzeuger (4) zugesetzt wird, um eine gewünschte chemische Zusammensetzung der Prüfatmosphäre (12) zu erzielen.

5. Verfahren nach einem der vorstehenden Ansprüche, **wobei** in der Prüfkammer (2) der Prüfatmosphäre (12) eine gerichtete Strömung (22) und / oder eine Verwirbelung (23) aufgeprägt wird.

6. Verfahren nach einem der vorstehenden Ansprüche, wobei ein Teil der der Prüfkammer (2) entnommenen Prüfatmosphäre (12) an die Umgebung abgegeben wird.

7. Verfahren nach einem der vorherigen Ansprüche, **wobei** das Plasma (10) durch eine kontinuierliche oder gepulste dielektrische Barriereentladung, oder durch einen kontinuierlichen oder gepulsten elektrischen Lichtbogen erzeugt wird.

8. Verfahren nach einem der vorhergehenden Ansprüche, **wobei** die Werkstoffprobe (3) und / oder die Prüfatmosphäre (12) UV-Licht (25) ausgesetzt wird.

9. Verfahren nach Anspruch 8, **wobei** das UV-Licht (25) durch eine Bogenentladung erzeugt wird.

10. Verfahren nach einem der vorstehenden Ansprüche, **wobei** zumindest einer der folgenden Parameter der Prüfatmosphäre (12) geregelt wird: Temperatur, Druck, Feuchtigkeitsgehalt, pH-Wert, Ozongehalt, chemische Zusammensetzung der Prüfatmosphäre.

11. Vorrichtung (1) zur Beständigkeitsprüfung mindestens einer Werkstoffprobe (3), mit
einer Prüfkammer (2) zur Aufnahme der Werkstoffprobe (3);
einem Plasmaerzeuger (4),
mit einer Zuführung (5) für mindestens ein Prozessgas (5G) zur Erzeugung eines Plasmas (10); und
einem Auslass (9) für einen Plasmajet (11) in die Prüfkammer (2) zum Ausbilden einer definierten Prüfatmosphäre (12),
**gekennzeichnet durch**
ein Umwälzsystem (16, 18, 19) zur Entnahme von Prüfatmosphäre (12) aus der Prüfkammer (2), Aufbereitung der entnommenen Prüfatmosphäre und Rückführung der aufbereiteten Prüfatmosphäre (12) als ein Prozessgas (5G) zum Plasmaerzeuger (4).

12. Vorrichtung (1) nach Anspruch 11, mit einer Zuführung (8) für einen weiteren Stoff (8S) zum Plasmaerzeuger (4).

13. Vorrichtung (1) nach Anspruch 11 oder 12 mit einer Regeleinrichtung (15) für zumindest einen der folgenden Parameter der Prüfatmosphäre: Temperatur, Druck, Feuchtigkeitsgehalt, pH-Wert, Ozongehalt, chemische Zusammensetzung der Prüfatmosphäre, wobei die Prüfkammer (2) wenigstens einen Sensor (14) für den mindestens einen Parameter enthält.

14. Vorrichtung (1) nach Anspruch 13, **wobei** durch die Regeleinrichtung (15) zumindest auf eine Zuführung (5) für das mindestens eine Prozessgas (5G) oder eine Zuführung (8) für den wenigstens einen Stoff (8S) oder eine Spannungsquelle (6) für den Plasmaerzeuger (4) einwirkbar ist.

## Claims

1. Method for testing the resistance of at least one material sample (3), comprising the following steps:
a) introducing the material sample (3) into a test chamber (2);
b) producing a plasma (10) in a plasma generator (4) and introducing a plasma jet (11) into the test chamber (2);
c) forming a defined test atmosphere (12) in the test chamber (2) by means of the plasma jet (11) in order to allow said test atmosphere (12) to act on the material sample (3);
**characterized in that**
test atmosphere (12) is taken from the test chamber (2) and at least a portion of the test atmosphere (12) taken from the test chamber (2) is supplied after filtering and/or conditioning as a process gas (5G) to the plasma generator (4).

2. Method according to claim 1, wherein the test atmosphere (12) is generated by converting at least one process gas (5G) in the plasma (10) and in the plasma jet (11), and wherein the composition of the test atmosphere (12) is checked and monitored by a sensor (14).

3. Method according to claim 2, wherein the at least one process gas (5G) is oxygen, air, or air with a defined humidity content.

4. Method according to claim 2 or 3, wherein at least one substance (8S) is added to the process gas (5G) in the plasma generator (4) in order to achieve a desired chemical composition of the test atmosphere (12).

5. Method according to any one of the preceding claims, wherein a directed flow (22) and/or a swirling (23) is applied to the test atmosphere (12) in the test chamber (2).

6. Method according to any one of the preceding claims, wherein a portion of the test atmosphere (12) taken from the test chamber (2) is discharged to the ambient environment.

7. Method according to any one of the preceding claims, wherein the plasma (10) is produced by a continuous or pulsed dielectric barrier discharge, or by a continuous or pulsed electric arc.

8. Method according to any one of the preceding claims, wherein the material sample (3) and/or the test atmosphere (12) is subjected to UV light (25).

9. Method according to claim 8, wherein the UV light (25) is generated by an arc discharge.

10. Method according to any one of the preceding claims, wherein at least one of the following parameters of the test atmosphere (12) is controlled: temperature, pressure, humidity content, pH value, ozone content, chemical composition of the test atmosphere.

11. Apparatus (1) for testing the resistance of at least one material sample (3), comprising
a test chamber (2) for accommodating the material sample (3);
a plasma generator (4),
having a feed (5) for at least one process gas (5G) for generating a plasma (10), and
an outlet (9) for a plasma jet (11) into the test chamber (2) for forming a defined test atmosphere (12),
**characterized by**
a circulation system (16, 18, 19) for extracting test atmosphere (12) from the test chamber (2), conditioning the extracted test atmosphere and returning the conditioned test atmosphere (12) as a process gas (5G) to the plasma generator (4).

12. Apparatus (1) according to claim 11, comprising a feed (8) for a further substance (8S) to the plasma generator (4).

13. Apparatus (1) according to claim 11 or 12, comprising a control device (15) for at least one of the following parameters of the test atmosphere: temperature, pressure, humidity content, pH value, ozone content, chemical composition of the test atmosphere, wherein the test chamber (2) comprises at least one sensor (14) for the at least one parameter.

14. Apparatus (1) according to claim 13, wherein the control device (15) can act on at least one feed (5) for the at least one process gas (5G) or a feed (8) for the at least one substance (8S) or a voltage source (6) for the plasma generator (4).

## Revendications

1. Procédé pour tester la résistance d'une éprouvette de matériau (3), comprenant les étapes suivantes :
a) introduction de l'éprouvette de matériau (3) dans une chambre d'essai (2) ;
b) génération d'un plasma (10) dans un générateur de plasma (4) et introduction d'un jet de plasma (11) dans la chambre d'essai (2) ;
c) formation d'une atmosphère d'essai (12) définie dans la chambre d'essai (2) au moyen du jet de plasma (11) afin que l'atmosphère d'essai (12) agisse sur l'éprouvette de matériau (3) ;
**caractérisé en ce que** de l'atmosphère d'essai (12) est prélevée dans la chambre d'essai (2) et au moins une partie de l'atmosphère d'essai (12) prélevée dans la chambre d'essai (2) est amenée après filtration et/ou traitement au générateur de plasma (4) comme gaz de traitement (5G).

2. Procédé selon la revendication 1, dans lequel l'atmosphère d'essai (12) est produite en convertissant au moins un gaz de traitement (5G) dans le plasma (10) et jet de plasma (11), et dans lequel la composition de l'atmosphère d'essai (12) est contrôlée et surveillée par un capteur (14).

3. Procédé selon la revendication 2, dans lequel l'au moins un gaz de traitement (5G) est de l'oxygène, de l'air ou de l'air ayant une teneur en humidité définie.

4. Procédé selon la revendication 2 ou 3, dans lequel au moins une substance (8S) est ajoutée au gaz de traitement (5G) dans le générateur de plasma (4) afin d'obtenir une composition chimique souhaitée de l'atmosphère d'essai (12).

5. Procédé selon l'une des revendications précédentes, dans lequel un flux dirigé (22) et/ou une turbulence (23) sont appliqués à l'atmosphère d'essai (12) dans la chambre d'essai (2).

6. Procédé selon l'une des revendications précédentes, dans lequel une partie de l'atmosphère d'essai (12) prélevée dans la chambre d'essai (2) est libérée dans l'environnement.

7. Procédé selon l'une des revendications précédentes, dans lequel le plasma (10) est généré par une décharge de barrière diélectrique continue ou en impulsions ou par un arc électrique continu ou en impulsions.

8. Procédé selon l'une des revendications précédentes, dans lequel l'éprouvette de matériau (3) et/ou l'atmosphère d'essai (12) sont exposées à de la lumière UV (25).

9. Procédé selon la revendication 8, dans lequel la lumière UV (25) est produite par une décharge d'arc électrique.

10. Procédé selon l'une des revendications précédentes, dans lequel au moins un des paramètres suivants de l'atmosphère d'essai (12) est régulé : température, pression, humidité, pH, teneur en ozone, composition chimique de l'atmosphère d'essai.

11. Dispositif (1) pour tester la résistance d'au moins une éprouvette de matériau (3), avec
une chambre d'essai (2) destinée à recevoir l'éprouvette de matériau (3),
un générateur de plasma (4),
avec une arrivée (5) pour au moins un gaz de traitement (5G) pour produire un plasma (10) ; et
avec une sortie (9) pour un jet de plasma (11) dans la chambre d'essai (2) pour former une atmosphère d'essai (12) définie,
**caractérisé en ce qu'**il comporte un système de circulation (16, 18, 19) pour prélever de l'atmosphère d'essai (12) dans la chambre d'essai (2), préparer l'atmosphère d'essai prélevée et ramener l'atmosphère d'essai (12) préparée au générateur de plasma (4) comme gaz de traitement (5G).

12. Dispositif (1) selon la revendication 11, avec une arrivée (8) pour une autre substance (8S) dans le générateur de plasma (4).

13. Dispositif (1) selon la revendication 11 ou 12 avec un dispositif de régulation (15) pour au moins un des paramètres suivants de l'atmosphère d'essai : température, pression, humidité, pH, teneur en ozone, composition chimique de l'atmosphère d'essai, la chambre d'essai (2) contenant au moins un capteur (14) pour l'au moins un paramètre.

14. Dispositif (1) selon la revendication 13, dans lequel le dispositif de régulation (15) peut agir au moins sur une arrivée (5) pour l'au moins un gaz de traitement (5G) ou sur une arrivée (8) pour l'au moins une substance (8S) ou sur une source de tension (6) pour le générateur de plasma (4).
